(19) Europäisches Patentamt
European Patent Office
Office européen des brevets

(11) **EP 1 343 653 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(21) Anmeldenummer: **01988038.4**

(22) Anmeldetag: **18.12.2001**

(51) Int Cl.:
**B60L 11/02** *(2006.01)*

(86) Internationale Anmeldenummer:
**PCT/EP2001/014935**

(87) Internationale Veröffentlichungsnummer:
**WO 2002/051663 (04.07.2002 Gazette 2002/27)**

(54) **VERFAHREN ZUM BETREIBEN EINES NICHTSCHIENENGEBUNDENEN LAND-KRAFTFAHRZEUGS MIT VERBRENNUNGSMOTOR-GENERATOR-EINHEIT UND ANTRIEBS-ELEKTROMOTOR, UND DERARTIGES KRAFTFAHRZEUG**

METHOD FOR OPERATING A NON-RAILBOUND LAND VEHICLE WITH A COMBUSTION ENGINE-GENERATOR UNIT AND AN ELECTRIC DRIVE MOTOR AND CORRESPONDING VEHICLE

PROCEDE PERMETTANT DE FAIRE FONCTIONNER UN VEHICULE ROUTIER NON ASSUJETTI A DES RAILS, DOTE D'UN GROUPE GENERATEUR A MOTEUR A COMBUSTION INTERNE ET D'UN MOTEUR ELECTRIQUE D'ENTRAINEMENT, ET VEHICULE Y RELATIF

(84) Benannte Vertragsstaaten:
**CH DE FR GB IT LI SE**

(30) Priorität: **22.12.2000 DE 10064188**

(43) Veröffentlichungstag der Anmeldung:
**17.09.2003 Patentblatt 2003/38**

(73) Patentinhaber: **Magnet-Motor Gesellschaft für magnetmotorische Technik mbH D-82319 Starnberg (DE)**

(72) Erfinder:
• **SCHERG, Christof**
  **82377 Penzberg (DE)**
• **WECK, Werner**
  **82319 Starnberg (DE)**
• **EHRHART, Peter**
  **81375 München (DE)**

(74) Vertreter: **Klunker . Schmitt-Nilson . Hirsch Winzererstrasse 106 80797 München (DE)**

(56) Entgegenhaltungen:
EP-A- 0 556 942   EP-A- 0 647 541
EP-A- 0 698 521   EP-A- 0 782 941
EP-A- 0 796 758   US-A- 5 352 971

EP 1 343 653 B1

## Beschreibung

Die Erfindung bezieht sich auf ein Verfahren zum Betreiben eines nichtschienengebundenen Land-Kraftfahrzeugs, welches einen Fahrantrieb mit folgenden Komponenten aufweist:

- eine Verbrennungsmotor-Generator-Einheit (= VG-Einheit);
- mindestens einen Antriebs-Elektromotor;
- einen vom Fahrer des Kraftfahrzeugs bedienbaren Leistungsbefehlsgeber für den Elektromotor;
- und eine Steuerelektronik, die mit der VG-Einheit, dem Elektromotor und dem Leistungsbefehlsgeber verbunden ist,

wobei die VG-Einheit mittels der Steuerelektronik so gesteuert wird, daß die im wesentlichen stationären Betriebsphasen des Kraftfahrzeugs jeweils mit einer Kraftstoffverbrauch-günstigen Kombination von geliefertem Drehmoment und Drehzahl des Verbrennungsmotors gefahren werden.

Ein Verfahren dieser Art ist aus EP 0 556 942 A1 bekannt. Wenn bei dem bekannten Fahrzeug der Antriebs-Elektromotor auf einen höheren Leistungszustand gebracht werden soll, wird der Verbrennungsmotor sofort auf über die Zeit zunehmende Leistung gesteuert, aber zugleich dafür gesorgt, daß die Abgabeleistung des Generators über die Zeit monoton steigt und dabei das von dem Generator aufgenommene Drehmoment stets unter dem von dem Verbrennungsmotor abgegebenen Drehmoment liegt. Dadurch steht Überschuss-Drehmoment des Verbrennungsmotors für eine Erhöhung seiner Drehzahl zur Verfügung. In dem Dokument wird aber betont, daß die Generatorleistung während des Übergangsvorgangs nie unter die Anfangsleistung sinken soll.

Bevor in EP 0 556 942 A1 die dortige Erfindung geschildert wird, wird die Möglichkeit beschrieben, bei einem Kraftfahrzeug mit VG-Einheit, mit Antriebs-Elektromotoren, und ohne mechanische Verbindung zwischen dem Verbrennungsmotor und den Fahrzeugrädern den Übergang zu einem höheren Leistungszustand der Antriebs-Elektromotoren folgendermaßen durchzuführen: Die Stromversorgung wird kurzzeitig von dem Generator völlig abgekoppelt, der Verbrennungsmotor läuft auf die Drehzahl des gewünschten neuen Betriebspunktes im Motorkernfeld hoch. Es wird in dem Dokument betont, daß diese kurzfristige Antriebskraftunterbrechung nachteilig und unkomfortabel sei.

Aus EP 0 647 541 A2 ist ein Verfahren bekannt, wie man bei einem Fahrzeug vorgeht, das eine VG-Einheit, einen Antriebs-Elektromotor und einen mechanisch angetriebenen Klimaanlagenkompressor besitzt, der über eine Kupplung zuschaltbar oder wegschaltbar ist. Wenn der Kompressor zugeschaltet wird, wird unter Beibehaltung der Drehzahl des Verbrennungsmotors die Leistungsabgabe des Generators gerade so viel reduziert, wie an mechanischer Leistung für das mechanische Antreiben des neu zugeschalteten Nebenverbrauchers benötigt wird. Erst danach wird die Drehzahl des Verbrennungsmotors allmählich gesteigert. All dies dient dem Ziel, jeglichen raschen Leistungsübergang des Verbrennungsmotors, mit daraus resultierendem erhöhtem Schadstoffausstoß und Kraftstoffverbrauch zu vermeiden.

Zur Erläuterung der Erfindung soll eingangs dargelegt werden, wie bei konventionellen, nichtschienengebundenen Land-Kraftfahrzeugen, d. h. Kraftfahrzeugen mit Verbrennungsmotor und mechanischem Antriebsstrang zu den angetriebenen Rädern, ohne Antriebs-Elektromotor, der Wunsch des Fahrers nach höherer Leistung in die Tat umgesetzt wird. Ein Verständnis der dabei ablaufenden Vorgänge erleichtert das Verständnis der anschließenden Erläuterung der Erfindung.

Wenn der Fahrer eines konventionellen Kraftfahrzeugs höhere Antriebsleistung wünscht, z.B. Wunsch nach Geschwindigkeitssteigerung oder Wunsch, bei Befahren einer Steigung nicht in der Geschwindigkeit abzufallen, drückt er das sogenannte Gaspedal in eine tiefere Stellung. Bei einem Otto-Motor führt dies zu einer stärkeren Öffnung einer Drosselklappe im Ansaugsystem, bei einem Diesel-Motor führt dies zu einer Erhöhung der Kraftstoff-Einspritzmenge pro Arbeitszyklus und Zylinder. In beiden Fällen "reagiert" der Verbrennungsmotor mit einer Erhöhung des von ihm gelieferten Drehmoments. Die Drehzahl des Verbrennungsmotors ist anfangs noch die gleiche wie zuvor, aber die jetzt gelieferte, höhere Leistung (= Drehmoment multipliziert mit Drehzahl) ist an den Antriebsrädern des Kraftfahrzeugs verfügbar. Das gewünschte Resultat, also z.B. Erhöhung der Fahrzeuggeschwindigkeit oder Vermeidung des Langsamerwerdens des Fahrzeugs an der Steigung, kann damit herbeigeführt werden.

Falls hingegen das Kraftfahrzeug vor dem Leistungserhöhungswunsch des Fahrers schon mit einer Leistungsabgabe betrieben worden ist, die nahe bei der zugehörigen maximalen Drehmomentabgabe des Verbrennungsmotors ist, dann wird das Kraftfahrzeug auf den Leistungserhöhungswunsch des Fahrers nicht mehr oder nur im Verlauf einer erheblichen Zeitspanne reagieren. Das Kraftfahrzeug läßt sich praktisch nicht mehr oder nur noch langsam auf höhere Fahrgeschwindigkeit bringen; eine Verringerung der Fahrgeschwindigkeit beim Befahren der Steigung ist nicht zu verhindern (wobei hier zur Erleichterung der Betrachtungsweise die Möglichkeit des Zurückschaltens in einen niedrigeren Getriebegang und damit Aufsuchen eines Betriebspunktes des Verbrennungsmotors mit höherem Drehmomentvermögen nicht betrachtet wird).

Grundsätzlich nicht viel anders verhält sich das Fahren mit einem Land-Kraftfahrzeug, welches eine Verbrennungsmotor-Generator-Einheit und mindestens einen Antriebs-Elektromotor enthält (wobei hier - für ein erleichtertes Ahfangsverständnis - das im Eingangsabsatz enthaltene Merkmal des Betriebs bei einer Drehmoment/Drehzahl-Kombination mit günstigem Kraftstoffverbrauch unberücksichtigt bleibt). Wenn der Fahrer den Wunsch nach höherer Leistungsabgabe hat, z.B. in den genannten Fahrsituationen, bringt er den Leistungsbefehlsgeber, z.B. ein Fußpedal, in eine Situation, welche die Leistungsanforderung P2 (wobei P2 größer als die bisherige Leistungsanforderung P1 ist) repräsentiert. Da auch bei dem Kraftfahrzeug mit VG-Einheit und Antriebs-Elektromotor die Antriebsleistung letztlich von dem Verbrennungsmotor stammt, muß dieser auf höhere Leistungsabgabe gebracht werden. Es ist aber geradezu das Zeichen eines technisch guten Kraftfahrzeugs mit VG-Einheit und Antriebs-Elektromotor, daß es in vielen Betriebssituationen mit nahe am jeweiligen maximalen Drehmoment arbeitenden Verbrennungsmotor betrieben wird, da in diesem Kennfeldbereich übliche Verbrennungsmotoren den spezifisch niedrigsten Kraftstoffverbrauch aufweisen. In dieser Situation geht es dem Fahrer des Kraftfahrzeugs mit VG-Einheit und Antriebs-Elektromotor ganz ähnlich wie dem Fahrer eines konventionellen Kraftfahrzeugs, welches auch mit Gasgeben keine Leistungsreserven mehr hat: Er kann höchstens noch mühsam und über eine nicht unbeträchtliche Zeitspanne verteilt die erhöhte Leistungsforderung realisieren. Bei einem Kraftfahrzeug, bei dem die im wesentlichen stationären Betriebsphasen mit einer verbrauchsgünstigen Drehmoment/Drehzahl-Kombination gefahren werden, sind diese Situationen des "Mangels an rascher Realisierbarkeit einer höheren Leistungsforderung" besonders häufig.

Der Erfindung liegt die Aufgabe zugrunde, ein Verfahren zum Betreiben eines Land-Kraftfahrzeugs mit den eingangs angegebenen Merkmalen verfügbar zu machen, das einen rascheren Übergang auf einen höheren Leistungszustand ermöglicht.

Zur Lösung dieser Aufgabe durch das Verfahren wird für den Übergang von einer Betriebsphase mit einem ersten Leistungszustand des Elektromotors und/oder mindestens eines Stromnebenverbrauchers des Kraftfahrzeugs zu einer Betriebsphase mit einem höheren, zweiten Leistungszustand des Elektromotors und/oder mindestens eines Stromnebenverbrauchers, die Anforderung elektrischer Leistung von einem Elektromotor und/oder von mindestens einem Stromnebenverbraucher vorübergehend in einem derartigen Ausmaß reduziert, dass die Leistungsabgabe des Generators der VG-Einheit geringer ist als zuvor, so dass ein rascherer Übergang des Verbrennungsmotors von einer ersten Leistungsabgabe zu einer höheren, zweiten Leistungsabgabe erreicht wird, wobei in Abhängigkeit von dem Unterschied zwischen dem ersten Leistungszustand und dem geforderten zweiten Leistungszustand Reduzierungen der Anforderung elektrischer Leistung in unterschiedlicher Größe eingesetzt werden.

Die erfindungsgemäße, vorübergehende Reduzierung der Anforderung elektrischer Leistung von dem Elektromotor und/oder mindestens einem Stromnebenverbraucher führt dazu, daß der Verbrennungsmotor auf einmal "Leistung übrig hat" und deshalb diesen Leistungsüberschuß in umgehende Drehzahlzunahme umsetzen kann. Insgesamt erreicht der Verbrennungsmotor damit rasch ein höheres Leistungsabgabeniveau, d. h. ein Niveau von abgebbarer Leistung gemäß höherer Drehzahl multipliziert mit dem Drehmoment, das der Kraftstoffverbrauch-günstigen Kombination entspricht. Durch Beendigung der Reduzierung der Anforderung elektrischer Leistung wird die erhöhte Leistungsabgabe des Verbrennungsmotors für den Antrieb des Kraftfahrzeugs verfügbar. Es ist bevorzugt, wenn sich diese Vorgänge innerhalb möglichst kurzer

Zeit abspielen, wobei naturgemäß ein Wechselspiel zwischen der Größe der Reduzierung der Anforderung elektrischer Leistung und der erforderlichen Zeitspanne zum Erreichen des erhöhten Leistungsabgabeniveaus besteht, naturgemäß auch eine Abhängigkeit von der Leistungsdifferenz zwischen dem ersten Leistungszustand und dem zweiten Leistungszustand. Geringe Größe der Reduzierung der Anforderung elektrischer Leistung und große Differenz der Leistungszustände erhöhen tendenziell die Zeitspanne der vorübergehenden Reduzierung der Anforderung elektrischer Leistung. Auch die "Flankensteilheit" der Reduzierung der Anforderung elektrischer Leistung und der Erhöhung der Zufuhr elektrischer Leistung zu dem Elektromotor und/oder dem Stromnebenverbraucher am Ende des Übergangs spielt eine Rolle. In der Regel wird man die Auslegung so treffen können, daß zumindest für nicht außergewöhnlich große Differenzen der Leistungszustände die Zeitspanne der vorübergehenden Reduzierung der Anforderung elektrischer Leistung kürzer als 1 s, häufig sogar unter 0,5 s, ist.

Wo in den Ansprüchen von "Stromnebenverbraucher" gesprochen wird, sind vorzugsweise Stromnebenverbraucher gemeint, die einen beträchtlichen Leistungsbedarf haben, vorzugsweise gemessen am durchschnittlichen oder maximalen Leistungsbedarf des Antriebs-Elektromotors oder der Antriebs-Elektromotoren. Man könnte z. B. definieren "Leistungsbedarf des Stromnebenverbrauchers liegt oberhalb eines Schwellenwerts". Oder man könnte z. B. definieren "Leistungsbedarf beträgt mehr als 5 %, vorzugsweise mehr als 10 % , höchst vorzugsweise mehr als 30 % des mittleren oder des maximalen Leistungsbedarfs des Antriebs-Elektromotors oder der Summe der Antriebs-Elektromotoren". In einem Teil der Fälle kommt es auf den Leistungsbedarf eines einzelnen Stromnebenverbrauchers an, in anderen Fällen kommt es auf die Summe der gerade eingeschalteten Stromnebenverbraucher an. Um ein griffiges Beispiel zu geben:

Ein Lastkraftwagen möge Antriebs-Elektromotoren mit einer Maximalleistung, in der Summe, von 300 kW haben. Ob ein Scheibenwischermotor oder zwei Nebelscheinwerfer oder ein Belüftungsgebläse für die Frontscheibe eingeschaltet wird oder nicht, ist für das Gesamtsystem praktisch ohne Belang. Wenn hingegen der Lastkraftwagen einen Kompressor mit einer Leistung von 40 kW für eine Kühlanlage für einen gekühlten Laderaum hat und der Kältekompressor elektrisch angetrieben wird, dann spielt es für das Gesamtsystem durchaus eine Rolle, ob der Kältekompressor eingeschaltet wird oder nicht oder ob er z. B. mit voller oder mit verringerter Leistung betrieben wird. Außerdem unterscheidet man sinnvollerweise zwischen betriebsnotwendigen Stromnebenverbrauchern, z. B. elektrisch angetriebenes Gebläse für das Kühlwasser des Verbrennungsmotors, und Stromnebenverbrauchern, deren Betrieb problemlos für eine Zeitphase unterbrochen oder in der Leistung reduziert werden kann, z. B. den schon angesprochenen, elektrisch angetriebenen Kältekompressor.

Wenn der Leistungszustandsübergang durch Einschalten eines vorher außer Betrieb befindlichen Stromnebenverbrauchers ausgelöst wird, dann muß für die Reduzierung der Leistungsanforderung ein anderer Stromnebenverbraucher und/oder der Elektromotor herangezogen werden. Wenn hingegen der Leistungszustandsübergang durch Höherschalten eines schon vorher in Betrieb befindlichen Stromnebenverbrauchers ausgelöst wird, dann kann zusätzlich oder alternativ die erfindungsgemäße vorübergehende Reduzierung der Leistungsanforderung an diesem Stromnebenverbraucher vorgenommen werden.

Aus den Ansprüchen 1 und 2 ergibt sich deutlich, daß man bei dem Leistungszustands-Übergang im Zusammenhang mit der Reduzierung der Anforderung elektrischer Leistung 9 Fälle unterscheiden kann:

1. Der Antriebs-Elektromotor soll zu einem höheren Leistungszustand übergehen. Zu diesem Zweck wird die Anforderung elektrischer Leistung von diesem Antriebs-Elektromotor zunächst vorübergehend reduziert. Dies ist ein ganz besonders wichtiger Fall der Ausbildung des erfindungsgemäßen Verfahrens und des erfindungsgemäßen Kraftfahrzeugs.

2. Ein Stromnebenverbraucher beträchtlicher Leistung wird entweder eingeschaltet oder in seinem Leistungsbedarf hochgeschaltet. Zu diesem Zweck wird die Anforderung elektrischer Leistung von dem Antriebs-Elektromotor vorübergehend reduziert.

3. Sowohl der Antriebs-Elektromotor soll zu einem höheren Leistungszustand gebracht werden als auch der Stromnebenverbraucher beträchtlicher Leistung soll eingeschaltet werden oder zu einer höheren Leistung geschaltet werden. Zu diesem Zweck wird die Anforderung elektrischer Leistung von dem Elektromotor vorübergehend reduziert (sozusagen Summe der Fälle 1. und 2.).

4. Der Antriebs-Elektromotor soll zu einem höheren Leistungszustand gebracht werden. Zu diesem Zweck wird die Anforderung elektrischer Leistung von einem Stromnebenverbraucher beträchtlicher Leistung vorübergehend reduziert. Auch dies ist eine besonders wichtige Ausbildung des erfindungsgemäßen Verfahrens und des erfindungsgemäßen Kraftfahrzeugs.

5. Ein Stromnebenverbraucher beträchtlicher Leistung soll eingeschaltet werden oder auf höhere Leistung geschaltet werden. Zu diesem Zweck wird die Anforderung elektrischer Leistung von diesem und/oder einem anderen Stromnebenverbraucher vorübergehend reduziert.

6. Sowohl der Antriebs-Elektromotor soll auf einen höheren Leistungszustand gebracht werden als auch ein Stromnebenverbraucher beträchtlicher Leistung soll eingeschaltet oder auf eine höhere Leistung geschaltet werden. Zu diesem Zweck wird die Anforderung elektrischer Leistung von einem Stromnebenverbraucher beträchtlicher Leistung vorübergehend reduziert.

7. , 8., 9. Diese Fälle entstehen aus den Fällen 1., 2., 3. (oder auch aus den Fällen 4., 5., 6.), wenn man die Anforderung elektrischer Leistung nicht nur allein bei dem Antriebs-Elektromotor oder allein bei einem Stromnebenverbraucher vorübergehend reduziert, sondern sowohl bei dem Antriebs-Elektromotor als auch bei einem Stromnebenverbraucher.

Insbesondere im Fall der Reduzierung elektrischer Leitung von einem Stromnebenverbraucher schließt das Wort "Reduzieren" auch den unteren Grenzfall des "Reduzierens auf 0" also das Abschalten, ein. Insbesondere im Fall des Stromnebenverbrauchers schließt der Begriff "erster Leistungszustand des Stromnebenverbrauchers" auch den unteren Grenzfall des Ausgeschaltetseins ein.

Das erfindungsgemäße Kraftfahrzeug kann mehrere. Antriebselektromotoren aufweisen, wobei als besonders typisches Beispiel ein linker Antriebs-Elektromotor für ein linkes Vorderrad oder Hinterrad und ein rechter Antriebs-Elektromotor für ein rechtes vorderes oder hinteres Antriebsrad genannt wird (ebenfalls gut verwirklichbares Gegenbeispiel: gemeinsamer Antriebs-Elektromotor für zwei Vorderräder oder für zwei Hinterräder). Auch die Möglichkeit des Dreiradfahrzeugs, vorne oder hinten angetrieben, sei erwähnt. Elektromotoren für Allradantrieb sind ebenfalls möglich.

In den Ansprüchen wird bewußt von "Leistungsbefehlsgeber" statt z. B. von "Fahrpedal" (entsprechend dem "Gaspedal" bei konventionellen Kraftfahrzeugen) gesprochen. Der Leistungsbefehlsgeber könnte ja auch ein manuell zu bedienendes Element sein oder auch ein durch Sprachsteuerung zu bedienender Leistungsbefehlsgeber. Insbesondere im Fall von per Fuß oder per Hand zu betätigenden Leistungsbefehlsgebern wird man häufig eine Verwirklichung wählen, bei der die momentan vom Fahrer durch Bedienung gesetzte Stellung (Winkelstellung oder translatorische Stellung) des Leistungsbefehlsgebers ein momentanes Signal liefert, welches die momentane Leistungsforderung des Fahrers repräsentiert. Es sind aber auch andere Ausführungen denkbar, insbesondere eine sequenzielle Ausführung (einmal antippen: erste Leistungsstufe, nochmals antippen: zweite Leistungsstufe usw.) oder Auslegungen nach Art einer elektronischen Uhr (einmal antippen: gewählte Leistungsstufe erhöht sich um 1; länger draufbleiben: die gewählte Leistungsstufe erhöht sich immer weiter jeweils um 1, bis der Fahrer vom Leistungsbefehlshaber weggeht).

Die Ausdrucksweise "im wesentlichen stationäre Betriebsphasen des Kraftfahrzeugs" bedeutet Betriebsphasen, in denen sich - über die Zeit betrachtet - die Leistungsforderung nicht oder zeitlich recht langsam oder in recht geringem Ausmaß ändert. Die Ausdrucksweise "Kraftstoffverbrauch-günstig" soll den Fall des exakt minimalen Kraftstoffverbrauchs für die geforderte Leistung und die Fälle nahe dem exakt minimalen Kraftstoffverbrauch für die geforderte Leistung einschließen. Konkret liegen die letztgenannten Fälle vorzugsweise weniger als 10%, stärker vorzugsweise weniger als 5 %, höchst vorzugsweise weniger als 3 %, über dem exakt minimalen Kraftstoffverbrauch.

Zu dem Merkmal "Fahren jeweils mit einer Kraftstoffverbrauch-günstigen Kombination von geliefertem Drehmoment und Drehzahl des Verbrennungsmotors" soll noch die folgende Erläuterung gegeben werden:

Wenn man in einem Koordinatensystem das Drehmoment M auf der Ordinate und die Drehzahl auf der Abszisse aufträgt und in diesem Koordinatensystem eine Schar von Linien konstanter Leistung einträgt, dann sind die Linien konstanter Leistung - grob gesprochen - hyperbelförmig; eine Linie größerer konstanter Leistung liegt weiter weg vom Nullpunkt des Koordinatensystems als eine Linie kleinerer konstanter Leistung. Eine geforderte Leistung des Verbrennungsmotors kann man grundsätzlich mit dem Produkt aus unterschiedlichen Drehzahlen und Drehmomenten realisieren

$$P = 2\pi \ x \ M_1 \ x \ n_1 = 2\pi \ x \ M_2 \ x \ n_2 = \ ....$$

Als konkretes Zahlenbeispiel:

Geforderte Leistung P des Verbrennungsmotors beträgt 200 kW, entweder erzeugbar aus 500 Nm bei ca. 3800 $min^{-1}$ oder erzeugbar aus 750 Nm bei ca. 2400 $min^{-1}$. In das gleiche Koordinatensystem kann man Linien gleichen spezifischen Verbrauchs (sogenannte "Muschellinien"), Einheit typischerweise g Brennstoff pro kWh, einzeichnen, auch den Punkt des absolut niedrigsten spezifischen Verbrauchs. Nur eine der Linien konstanter Leistung geht exakt durch den Punkt des absolut niedrigsten spezifischen Verbrauchs. Man kann nun in dem geschilderten Diagramm für jede geforderte Leistung P eine Kombination von Drehmoment und Drehzahl heraussuchen, die für diese Leistung die absolut verbrauchsgünstigste oder nahe hierbei ist. In der Regel befindet man sich dann an einer Stelle des Diagramms, die einigermaßen nahe an der Drehmoment-Drehzahl-Linie bei Volllast des Verbrennungsmotors liegt. Außerdem liegt diese Stelle in der Regel bei ziemlich der niedrigsten Drehzahl, mit der man die geforderte Leistung P noch darstellen kann. Die geschilderten Zusammenhänge sind dem Durchschnittsfachmann auf dem Gebiet der Verbrennungsmotoren bekannt, wurden aber hier im Zusammenhang mit der Erfindung dargelegt, um ein bequemeres Verständnis der vorliegenden Anmeldung zu erreichen.

Konkret muß man sich vorstellen, daß die VG-Einheit eine Steuerung besitzt, die den Verbrennungsmotor und damit die gesamte VG-Einheit laufend (bei neuer im wesentlichen stationärer Betriebsphase) auf die geschilderte Kraftstoffverbrauch-günstige Kombination von Drehmoment und Drehzahl bringt.

Im Anspruch 1 und in der bisherigen Beschreibung ist bewußt nur auf den Übergang von einem niedrigeren Leistungszustand zu einem höheren Leistungszustand eingegangen worden. Beim Übergang von einem höheren Leistungszustand zu einem niedrigeren Leistungszustand also z.B. Wunsch des Fahrers nach Geschwindigkeitsverringerung oder Wunsch des Fahrers nach nicht zunehmender Geschwindigkeit beim Befahren eines Straßengefälles oder Abschalten eines Stromnebenverbrauchers hoher Leistung, stellt sich kein ähnliches Problem, wie vorher für die schlechte Fähigkeit des Fahrzeugs, den Wunsch nach höherer Leistung in die Tat umzusetzen, ausgeführt. Ein entsprechendes Signal des Leistungsbefehlsgebers und/oder das Abschalten des Stromnebenverbrauchers bedeutet Verringerung der Anforderung elektrischer Leistung. Als Folge geht der Verbrennungsmotor zu einem niedrigeren Leistungsabgabeniveau über. Die Steuerelektronik sorgt dafür, daß auch für die neue, im wesentlichen stationäre Betriebsphase die verbrauchsgünstige Kombination von Drehmoment und Drehzahl eingestellt wird.

Wenn das Kraftfahrzeug mehrere Antriebs-Elektromotoren besitzt und man hier vorübergehend reduzieren will, ist es in der Regel als am günstigsten bevorzugt, die erfindungsgemäße Reduzierung der Anforderung elektrischer Leistung bei allen diesen Antriebs-Elektromotoren vorzunehmen. Es gibt allerdings auch Ausführungsformen, bei denen dieses Reduzieren nur bei einem Elektromotor oder nur bei einem Teil der Elektromotoren vorgenommen wird, z.B. nur bei dem Elektromotor bzw. den Elektromotoren für die angetriebenen Vorderräder und nicht bei dem Elektromotor bzw. den Elektromotoren für die angetriebenen Hinterräder. Wenn das Kraftfahrzeug mehrere leistungsstarke Stromnebenverbraucher besitzt und man hier vorübergehend reduzieren will, ist es in der Regel als am günstigsten bevorzugt, die Reduzierung der Anforderung elektrischer Leistung bei einem oder einer kleinen Teilanzahl von momentan entbehrlichen Stromnebenverbrauchern vorzunehmen.

Vorrichtungsmäßig ist der Gegenstand der Erfindung ein nichtschienengebundenes Land-Kraftfahrzeug, welches einen Fahrantrieb mit folgenden Komponenten aufweist:

- eine Verbrennungsmotor-Generator-Einheit (= VG-Einheit);
- mindestens einen Antriebs-Elektromotor;
- einen vom Fahrer des Kraftfahrzeugs bedienbaren Leistungsbefehlsgeber für den Elektromotor;
- und eine Steuerelektronik, die mit der VG-Einheit, dem Elektromotor und dem Leistungsbefehlsgeber verbunden ist,

wobei die Steuerelektronik so ausgebildet und betriebsfähig ist, dass die VG-Einheit so gesteuert wird, dass die im wesentlichen stationären Betriebsphasen des Kraftfahrzeugs jeweils mit einer Kraftstoffverbrauch-günstigen Kombination von geliefertem Drehmoment und Drehzahl des Verbrennungsmotors gefahren werden, wobei die Steuerelektronik so ausgebildet und betriebsfähig ist, dass sie, für den Übergang von einer Betriebsphase mit einem ersten Leistungszustand des Elektromotors und/oder mindestens eines Stromnebenverbrauchers des Kraftfahrzeugs zu einer Betriebsphase mit einem höheren, zweiten Leistungszustand des Elektromotors und/oder mindestens eines Stromnebenverbrauchers, die Anforderung elektrischer Leistung von einem Elektromotor und/oder von mindestens einem Stromnebenverbraucher vorübergehend in einem derartigen Ausmaß reduziert, dass die Leistungsabgabe des Generators der VG-Einheit geringer ist als zuvor, so dass ein rascherer Übergang des Verbrennungsmotors von einer ersten Leistungsabgabe zu einer höheren zweiten Leistungsabgabe erreicht wird, wobei in Abhängigkeit von dem Unterschied zwischen dem ersten Leistungszustand und dem geforderten zweiten Leistungszustand Reduzierungen der Anforderung elektrischer Leistung in unterschiedlicher Größe eingesetzt werden.

Alles, was weiter vorn im Zusammenhang mit dem verfahrensmäßigen Aspekt der Erfindung ausgesagt worden ist, insbesondere zur technischen Funktion der Erfindungsmerkmale, zur Aufgabenstellung, zur Erläuterung bestimmter Begriffe, und zu konkreteren Ausführungsmöglichkeiten, gilt auch für den vorrichtungsmäßigen Aspekt der Erfindung.

Bei dem Kraftfahrzeug ist die Steuerelektronik so ausgebildet und betriebsfähig, daß die Größe und/oder das zeitliche Ausmaß der Reduzierung der Anforderung elektrischer Leistung in Abhängigkeit von dem Unterschied zwischen dem ersten Leistungszustand und dem zweiten Leistungszustand unterschiedlich ist. Je größer die Differenz zwischen dem ersten Leistungszustand und dem zweiten Leistungszustand ist, desto größer und/oder langdauernder wird man die Reduzierung der Anforderung elektrischer Leistung machen müssen, wobei zwischen Größe und zeitlichem Ausmaß eine Wechselbeziehung besteht.

Vorzugsweise ist bei dem erfindungsgemäßen Kraftfahrzeug die Steuerelektronik so ausgebildet und betriebsfähig, daß sie während des Übergangs von der ersten Leistungsabgabe des Verbrennungsmotors zu der zweiten Leistungsabgabe des Verbrennungsmotors die Reduzierung der Anforderung elektrischer Leistung dynamisch an den momentan bestehenden Unterschied zwischen dem momentanen Leistungsniveau des Verbrennungsmotors und der zweiten Leistungsabgabe des Verbrennungsmotors anpaßt. Wenn z. B. schon die Hälfte des Übergangs von der ersten Leistungsabgabe zu der zweiten Leistungsabgabe "geschafft ist", kann man die Reduzierung der Anforderung elektrischer Leistung von dem Elektromotor bereits zum Teil zurücknehmen. Das Ganze muß man sich vorzugsweise als einen stufenlosen oder in kleinen Stufen ablaufenden, kontinuierlichen Vorgang vorstellen. Überhaupt führt die Erfindung sei es mit oder ohne die beschriebene "dynamische Nachregelung" zu einer Selbststabilisierung. Bei beliebigen, auch unvorhergesehenen Leistungsdefiziten, z. B. Störungen am Verbrennungsmotor, Störung der Kraftstoffzufuhr zum Verbrennungsmotor, Schwankungen der Antriebsleistung, Zuschalten von mechanisch vom Verbrennungsmotor angetriebenen oder von elektrisch angetriebenen Nebenverbrauchern, wird rasch wieder ein stabiler Betriebspunkt erreicht.

Vorzugweise ist bei dem Kraftfahrzeug eine elektronische Modifikationseinrichtung vorgesehen, mit der Signale des Leistungsbefehlsgebers und/oder die Stromaufnahme des Stromnebenverbrauchers widerspiegelnde Signale in, besonders bevorzugt hinsichtlich der Amplitude und/oder der Form und/oder der Zeitlage und/oder des zeitlichen Verlaufs, modifizierte Signale umgesetzt werden können. Auf diese Weise kann man sich von dem Zwang befreien, daß z.B. das Signal des Leistungsbefehlsgebers "Leistung P2 = 2 P1" unmodifiziert sofort in eine entsprechende Reduzierung der Anforderung elektrischer Leistung umgesetzt wird. Besonders bevorzugte Modifikationen sind Umsetzung in eine zeitlich gerampte Signalfolge (d.h. Übergang in mehreren kleineren Schritten statt Übergang in einem einzigen großen Schritt) und Modifizierung durch "Einbau", insbesondere eines anfänglichen, Zeitverzugs bei der Reduzierung der Anforderung elektrischer Leistung. Im erstgenannten Fall ergibt sich eine Steigerung des Fahrkomforts und ein dichteres Verweilen am verbrauchsoptimalen Betriebspunkt; allerdings dauert der Übergang etwas länger. Im zweitgenannten Fall wird die vorübergehende Reduzierung der Anforderung elektrischer Leistung später wirksam und das "System" wartet, ob der Fahrer nach kurzer Zeit eventuell wieder einen niedrigeren Leistungswunsch hat. So wird schnelles Auf und Ab des Leistungswunsches nivelliert. Es ist auch möglich, das originäre Signal des Leistungsbefehlsgebers für einen Teil der Zeitdauer in eine gerampte Signalfolge umzusetzen und für die restliche Zeitdauer, vorzugsweise den Anfangsteil der Zeitdauer, unmodifiziert zu lassen. In dieser restlichen Zeitdauer wird eine Leistungsänderung entsprechend der Differenz zwischen voller Höhe und geramptem Teil freigegeben. Dies führt zu einer spontaneren Anfangsreaktion auf erhöhte Leistungsforderung. Es ist bevorzugt, wenn die Modifikationseinrichtung mehrere Modifikationweisen gespeichert enthält und zwischen den Modifikationsweisen gewählt werden kann, vorzugsweise mittels eines Bedienungselements am Armaturenbrett des Kraftfahrzeugs.

Vorzugsweise weist der Leistungsbefehlsgeber ein vom Fahrer des Fahrzeugs bedienbares, mechanisches Element, vorzugsweise ein Pedal, und einen Wandler, der die Stellung und/oder die Änderung der Stellung des mechanischen Elements in elektrische Signale umsetzt, auf.

Die zuvor beschriebene Modifikationseinrichtung kann insbesondere körperlich mit der Steuerelektronik vereinigt sein, oder körperlich mit dem Wandler vereinigt sein, oder körperlich einen getrennt ausgebildeten Baustein darstellen. Die Steuerelektronik muß selbstverständlich nicht ein zu einer einzigen körperlichen Einheit zusammengefaßter Baustein sein, sondern kann, wenn dies praktischer ist, in mehrere körperlich getrennte Bausteine aufgeteilt sein.

Vorzugsweise ist die Steuerelektronik so ausgebildet und betriebsfähig, daß sie bei der genannten Steuerung auf Kraftstoffverbrauch-günstige Kombination auch den momentanen Leistungsbedarf von elektrischen Nebenverbrauchern berücksichtigt. Dies kann z.B. durch die Steuerelektronik insgesamt für die elektrische Abgabeleistung des Generators erfolgen. Man kann aber auch auf individuelle Nebenverbraucher, insbesondere solche mit vergleichbar größerem Leistungsbedarf, abheben.

Es wird darauf hingewiesen, daß alle Aussagen, die zum vorrichtungsmäßigen Aspekt der Erfindung, insbesondere im Zusammenhang mit bevorzugten Weiterbildungen der Erfindung, gemacht worden sind, in analoger Weise auch für den verfahrensmäßigen Aspekt der Erfindung gelten. Das erfindungsgemäße Verfahren läßt sich mit einem oder mehreren derjenigen Merkmale weiterbilden, die als Vorzugsmerkmale im Zusammenhang mit den vorrichtungsmäßigen Teil der Erfindung beschrieben worden sind.

Es wird ausdrücklich betont, daß durch die Erfindung auch die alternative oder die zusätzliche Möglichkeit gelehrt wird, mechanisch vom Verbrennungsmotor angetriebene Nebenverbraucher (z.B. Hydraulikpumpe, Lüfterrad für Kühlung) analog zu behandeln, wie bisher für Stromnebenverbraucher beschrieben. Also insbesondere: Beim mechanischen Zuschalten des Nebenverbrauchers die Anforderung elektrischer Leistung von dem Elektromotor und/oder mindestens einem Stromnebenverbraucher vorübergehend reduzieren. Oder insbesondere: Bei Übergang zu höherem Leistungzustand des Elektromotors und/oder des Stromnebenverbrauchers die Anforderung mechanischer Antriebsleistung für diesen oder einen anderen Nebenverbraucher vorübergehend reduzieren.

Die Erfindung und Weiterbildungen der Erfindung werden nachfolgend anhand eines schematisiert zeichnerisch dargestellten Ausführungsbeispiels und eines beispielhaften Ablaufdiagramms noch näher erläutert.

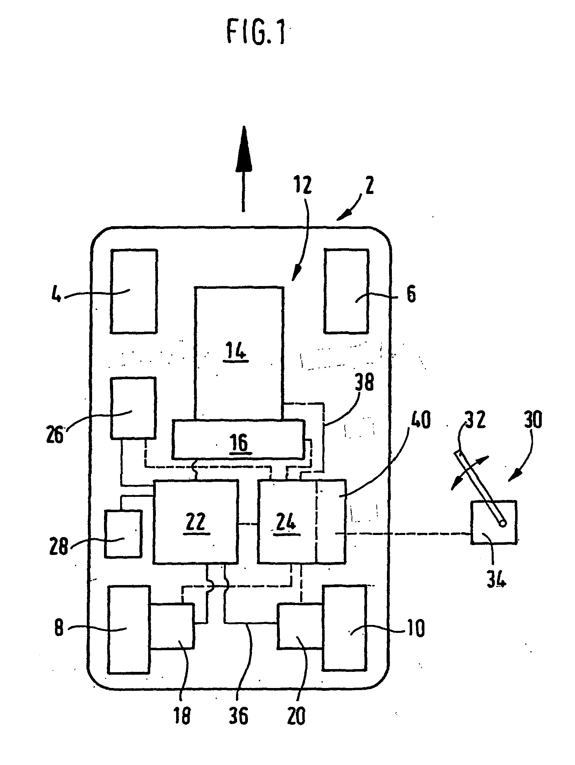

Fig. 1 zeigt eine schematisierte Draufsicht auf ein Land-Kraftfahrzeug, konkret einen vierrädrigen Personenkraftwagen, im Folgenden kurz "Fahrzeug" genannt;

Fig. 2 ist ein Ablaufdiagramm für das vorübergehende Reduzieren der Anforderung elektrischer Leistung.

Das dargestellte Fahrzeug 2 besitzt ein linkes Vorderrad 4, ein rechtes Vorderrad 6, ein linkes Hinterrad 8 und ein rechtes Hinterrad 10. Räumlich im wesentlichen zwischen den Vorderrädern 4 und 6 ist eine VG-Einheit 12 angeordnet, im wesentlichen bestehend aus einem Verbrennungsmotor 14 und einem elektrischen Strom erzeugenden Generator 16. Der Verbrennungsmotor 14 kann ein Otto-Motor oder ein Diesel-Motor sein. Alternativ sind andere Verbrennungsmotoren möglich, z.B. Erdgasmotoren, Wasserstoffmotoren oder andere Wärmekraftmaschinen wie z. B. ein Stirling-Motor oder eine Gasturbine, oder ein Dampfmotor. Der Generator 16 ist mit seiner Welle koaxial zur Kurbelwelle des Verbrennungsmotors 14 angeordnet. Es kann sich um einen Generator in Außenläuferbauart handeln. Der Generator 16 kann, vorzugsweise am Rotor, mit Dauermagneten, vorzugsweise Samarium-Kobalt-Dauermagneten oder Eisen-Neodym-Dauermagneten, ausgestattet sein.

Dem linken Hinterrad 8 ist ein linker Antriebs-Elektromotor 18, und dem rechten Hinterrad 10 ein rechter Antriebs-Elektromotor 20 zugeordnet. Statt der Elektromotoren 18 und 20 könnte ein gemeinsamer Elektromotor vorgesehen sein. Die Elektromotoren 18 und 20 könnten für die Vorderräder 4 und 6 statt für die Hinterräder 8 und 10 vorgesehen sein. Es könnten auch vier Elektromotoren für den Antrieb aller vier Räder 4 bis 10 vorgesehen sein. Die Elektromotoren 18 und 20 können entweder direkt auf das Hinterrad 8 bzw. das Hinterrad 10 arbeiten. Alternativ könnte jeweils ein Zwischen-Untersetzungsgetriebe vorgesehen sein. Auch eine zwischengesetzte Antriebswelle ist jeweils möglich.

Eine Leistungselektronik 22 ist mit einem Rechteck symbolisiert, eine Steuerelektronik 24 ist mit einem Rechteck symbolisiert, ein typischer, elektrischer Nebenverbraucher 26 ist mit einem Rechteck symbolisiert, wobei es sich typischerweise um Fahrzeugscheinwerfer, rückseitige Fahrzeugleuchten, heizbare Heckscheibe, elektrisch angetriebene Klimaanlage, elektrisch angetriebener Kühlungsventilator für die Kühlflüssigkeit des Verbrennungsmotors, elektrisch betätigte Bremsen, elektrisch angetriebene Servolenkung handelt. Außerdem ist zur Vervollständigung eine Fahrzeugbordbatterie 28 eingezeichnet.

Außerdem erkennt man als Leistungsbefehlsgeber einen Fahrbefehlsgeber 30, hier konkret in Form eines durch den Fuß des Fahrers betätigbaren Pedals 32. Dem Pedal 32 ist ein Wandler 34 zugeordnet, der abhängig von der Winkelstellung des Pedals 32 Signale abgibt.

Die Leistungselektronik 22 ist, wie mit durchgezogenen Linien angedeutet, mit Leistungskabeln 36 mit dem Generator 16, den Elektromotoren 18 und 20, dem Nebenverbraucher 26 und der Batterie 28 verbunden. Statt eines einzigen Nebenverbrauchers 26 kann man sich selbstverständlich auch mehrere Nebenverbraucher vorstellen.

Im hier beschriebenen Beispiel sind die Nebenverbraucher 26 über die Leistungselektronik 22 an den Fahrantrieb angekoppelt. Energetisch gleichwertig ist es jedoch, wenn Nebenverbraucher direkt mechanisch an den Verbrennungsmotor gekoppelt sind (z. B. Hydraulikpumpe).

Die Steuerelektronik 24 ist, wie mit unterbrochenen Linien angedeutet, über Signalleitungen 38 mit dem Verbrennungsmotor 14, dem Generator 16, dem Fahrbefehlsgeber 30, den Elektromotoren 18 und 20, der Leistungselektronik 22 und dem Nebenverbraucher 26 bzw. den Nebenverbrauchern verbunden. Im vorliegenden Ausführungsbeispiel ist eine Modifikationseinrichtung 40 körperlich zusammengefaßt mit der Steuerelektronik 24.

Wenn die Steuerelektronik 24 von dem Fahrbefehlsgeber 30 bzw. dem Wandler 34 her ein Signal erhält, welches eine erhöhte Leistungsforderung des Fahrers für die Elektromotoren 18 und 20 repräsentiert, wird zunächst - in Zusammenwirken mit der Leistungselektronik 22 - die Zufuhr elektrischer Leistung zu den Elektromotoren 18 und 20 vorübergehend reduziert. Zeitlich praktisch zusammenfallend mit dem Beginn dieser Reduzierung wird entweder direkt durch erhöhte Einspritzmenge oder indirekt über stärker geöffnete Drosselklappe und als Folge hiervon erhöhte Kraftstoffzufuhr, die Leistungsabgabe des Verbrennungsmotors 14 erhöht. Die Leistungsabgabe des Generators 16 reduziert sich zunächst wegen der Leistungsreduktion für die Elektromotoren 18 und 20. Der Überschuß steht damit für Beschleunigungsleistung des Verbrennungsmotors 14 zur Verfügung. In der dynamischen Nachführung steigt dann auch die Leistungsabgabe des Generators 16 wieder an, wobei aktive, gesteuerte ( z. B. körperlich dem Generator 16 oder der Leistungselektronik 22 zugeordnet) Gleichrichter für die Stromentnahme aus dem Generator 16 vorgesehen sein können. Die zur Verfügung stehende, höhere elektrische Leistung wird - unter Beteiligung der Leistungselektronik 22 - den Elektromotoren 18 und 20 zugeführt. Die Steuerelektronik 24 gibt vor, wann und mit welchem zeitlichen Verlauf von dem Reduzierungszustand der Zufuhr elektrischer Leistung zu den Elektromotoren 18 und 20 auf den Zustand der Zufuhr der vollen zur Verfügung stehenden elektrischen Leistung übergegangen wird.

Mittels der Modifikationseinrichtung 40 lassen sich die von dem Wandler 34 zu der Steuerelektronik 24 gelangenden Signale modifizieren bzw. die Reaktion der Steuerelektronik 24 auf die Signale modifizieren. Beispiele für konkrete, bevorzugte Modifikationen sind weiter vorn gegeben worden.

Bei dem Fahrzeug 2 läßt sich auch der Leistungsbedarf des Nebenverbrauchers 26, z. B. bei dessen Einschalten oder Höherschalten berücksichtigen, und zwar ebenfalls durch vorübergehende Reduzierung der Zufuhr elektrischer Leistung zu den Elektromotoren 18 und 20, bis der Verbrennungsmotor 14 auf höhere Leistung gebracht worden ist. Dies kann entweder vorgenommen werden, selbst wenn das Pedal 32 in ungeänderter Stellung bleibt, oder alternativ in Kombination mit einer Änderung der Pedalstellung. Der Nebenverbraucher 26 kann auch über die Modifikationseinrichtung 40 an die Steuerelektronik 24 angeschlossen sein, um seine Signale bzw. die Reaktion der Steuerelektronik 24 auf die Signale in gewünschter Weise zu modifizieren.

Die Elektromotoren 18 und 20 können elektronisch kommutierte Elektromotoren sein. Die Elektromotoren 18 und 20 können, insbesondere am Rotor, mit Dauermagneten ausgestattet sein, wobei zum bevorzugten Dauermagnetmaterial das gilt, was weiter vorn im Zusammenhang mit dem Generator 16 gesagt worden ist. Die Elektromotoren 18 und 20 können in Innenläuferbauart oder in Außenläuferbauart ausgeführt sein.

Nachdem die Funktionen der Steuerelektronik 24, der Modifikationseinrichtung 40 und des Wandlers 34 vorstehend detailliert beschrieben worden sind, ist es dem Durchschnittsfachmann aufgrund seines Fachwissens unschwer möglich, konkrete elektrische Schaltungen verfügbar zu machen, die diese Funktionen verwirklichen. Dies ist mit handelsüblichen elektronischen Bauelementen möglich.

Nach dem Studium der bisherigen Beschreibung ist leicht realisierbar, wie man statt der vorübergehenden Reduzierung der Anforderung elektrischer Leistung von den Elektromotoren 18 und 20 oder zusätzlich zu dieser Reduzierung die Anforderung elektrischer Leistung von dem Stromnebenverbraucher 26 vorübergehend reduzieren kann. Wenn, wie gehabt, die Steuerelektronik 24 von dem Fahrbefehlsgeber 30 bzw. dem Wandler 34 her ein Signal erhält, welches eine erhöhte Leistungsanforderung des Fahrers für die Elektromotoren 18 und 20 repräsentiert (und/oder wenn durch Einschalten eines nicht explizit eingezeichneten Stromnebenverbrauchers großer Leistung ein höherer Leistungszustand gefordert wird), wird zunächst - in Zusammenwirken mit der Leistungselektronik 22 - die Zufuhr elektrischer Leistung zu dem Nebenverbraucher 26 vorübergehend reduziert. Zeitlich praktisch zusammenfallend mit dem Beginn dieser Reduzierung wird entweder direkt durch erhöhte Einspritzmenge oder indirekt über stärker geöffnete Drosselklappe und als Folge hiervon erhöhte Kraftstoffzufuhr, die Leistungsabgabe des Verbrennungsmotors 14 erhöht. Die Leistungsabgabe des Generators 16 reduziert sich zunächst wegen der Leistungsreduktion für den Nebenverbraucher 26. Der Überschuß steht damit für Beschleunigungsleistung des Verbrennungsmotors zur Verfügung. In der dynamischen Nachführung steigt dann auch die Leistungsabgabe des Generators 16 wieder an. Die zur Verfügung stehende, höhere elektrische Leistung wird - unter Beteiligung der Leistungselektronik 22, dem Nebenverbraucher 26 zugeführt. Die Steuerelektronik 24 gibt vor, wann und mit welchem zeitlichen Verlauf von dem Reduzierungszustand der Zufuhr elektrischer Leistung zu dem Nebenverbraucher 26 auf den Zustand der Zufuhr der vollen zur Verfügung stehenden elektrischen Leistung übergegangen wird.

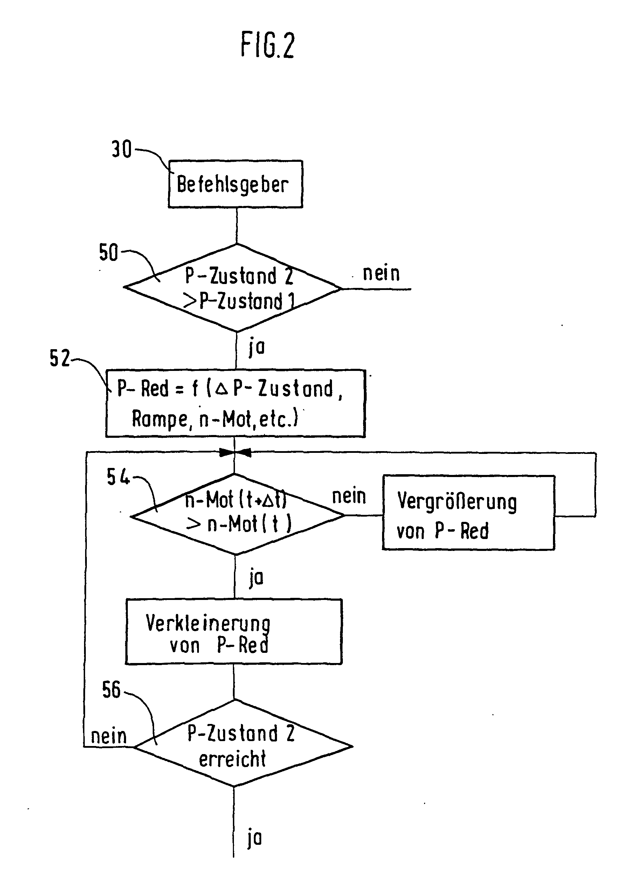

Mit dem in Figur 2 dargestellten Ablaufdiagramm soll der "elektronische Ablauf" beim Übergang zu einer Betriebsphase mit einem höheren Leistungszustand der Elektromotoren 18 und 20 erläutert werden.

Das von dem Befehlsgeber 30 kommende Signal wird zunächst in einem Entscheidungskasten 50 daraufhin bewertet, ob der aktuell gewünschte Leistungszustand 2 größer als der bisherige Leistungszustand 1 ist oder nicht. Wenn ja, wird in einem Kasten 52 eine Leistungsreduzierung P-Red, d. h. eine Leistung, um welche die Leistungsanforderung im "alten" Leistungszustand 1 (!) vorübergehend reduziert wird, definiert. P-Red wird bei der konkreten Ausführungsform als Funktion mehrerer Parameter bestimmt bzw. berechnet. Zum Kreis typischer Parameter gehört die Differenz zwischen der gewünschten "neuen" Leistung 2 und der bisherigen "alten" Leistung 1, die aktuelle Drehzahl des Verbrennungsmotors, eine etwaige Modifikation (wie in der Anmeldung ausgiebig beschrieben, z. B. eine zeitlich gerampte Berücksichtigung), und andere mögliche Parameter mehr.

In einem Entscheidungskasten 54 wird bewertet, ob nach einem geeignet kurzen Zeitintervall Δt die Drehzahl des Verbrennungsmotors 14 größer ist als zu Beginn des Zeitintervalls Δt. Wenn nein, wird P-Red vergrößert. Wenn ja, wird P-Red verkleinert. In einem Entscheidungskasten 56 wird dann überprüft, ob der gewünschte Leisutungszustand 2 bereits erreicht ist. Wenn ja, wird P-Red auf 0 gesetzt. Wenn nein, wird mit dem verkleinerten aktuellen P-Red weitergearbeitet.

Ein ganz analoger "elektronischer Ablauf" ist brauchbar, wenn man bei Wunsch nach erhöhter Leistung der Elektromotoren 8 und 10 die vorübergehende, erfindungsgemäße Leistungsreduzierung bei einem Stromnebenverbraucher betreibt. In diesem Fall wird P-Red für einen Stromnebenverbraucher bestimmt bzw. berechnet und an diesem Stromnebenverbraucher vorgenommen.

Der "elektronische Ablauf" in demjenigen Fall, daß der "neue" Leistungswunsch 2 durch das Zuschalten eines Stromnebenverbrauchers ausgelöst wird, ist als Analogie ersichtlich. Die Größe "Leistungszustand 2" wird dann eben von dem betreffenden, einzuschaltenden bzw. höher zu schaltenden Stromnebenverbraucher oder z. B. von der Summe der leistungsstarken Stromnebenverbraucher oder z. B. von der Summe der leistungsstarken Stromnebenverbraucher und der Elektromotoren hergeleitet. Analoges gilt für den "alten" Leistungszustand 1.

## Patentansprüche

1. Verfahren zum Betreiben eines nichtschienengebundenen Land-Kraftfahrzeugs (2), welches einen Fahrantrieb mit folgenden Komponenten aufweist:

    - eine Verbrennungsmotor-Generator-Einheit (12) (= VG-Einheit);
    - mindestens einen Antriebs-Elektromotor (18; 20);
    - einen vom Fahrer des Kraftfahrzeugs (2) bedienbaren Leistungsbefehlsgeber (30) für den Elektromotor (18; 20);
    - und eine Steuerelektronik (24), die mit der VG-Einheit (12), dem Elektromotor (18; 20) und dem Leistungsbefehlsgeber (30) verbunden ist,

    wobei die VG-Einheit (12) mittels der Steuerelektronik (24) so gesteuert wird, daß die im wesentlichen stationären Betriebsphasen des Kraftfahrzeugs (2) jeweils mit einer Kraftstoffverbrauch-günstigen Kombination von geliefertem Drehmoment und Drehzahl des Verbrennungsmotors (14) gefahren werden, wobei für den Übergang von einer Betriebsphase mit einem ersten Leistungszustand des Elektromotors (18; 20) und/oder mindestens eines Stromnebenverbrauchers (26) des Kraftfahrzeugs (2) zu einer Betriebsphase mit einem höheren, zweiten Leistungszustand des Elektromotors (18; 20) und/oder mindestens eines Stromnebenverbrauchers (26), die Anforderung elektrischer Leistung von einem Elektromotor (18; 20) und/oder von mindestens einem Stromnebenverbraucher (26) vorübergehend in einem derartigen Ausmaß reduziert wird, dass die Leistungsabgabe des Generators (16) der VG-Einheit (12) geringer ist als zuvor, so dass ein rascherer Übergang des Verbrennungsmotors (14) von einer ersten Leistungsabgabe zu einer höheren, zweiten Leistungsabgabe erreicht wird, wobei in Abhängigkeit von dem Unterschied zwischen dem ersten Leistungszustand und dem geforderten zweiten Leistungszustand Reduzierungen der Anforderung elektrischer Leistung in unterschiedlicher Größe eingesetzt werden.

2. Nichtschienengebundenes Land-Kraftfahrzeug (2), welches einen Fahrantrieb mit folgenden Komponenten aufweist:

> - eine Verbrennungsmotor-Generator-Einheit (12) (= VG-Einheit);
> - mindestens einen Antriebs-Elektromotor (18; 20);
> - einen vom Fahrer des Kraftfahrzeugs (2) bedienbaren Leistungsbefehlsgeber (30) für den Elektromotor (18; 20);
> - und eine Steuerelektronik (24), die mit der VG-Einheit (12), dem Elektromotor (18; 20) und dem Leistungsbefehlsgeber (30) verbunden ist,

wobei die Steuerelektronik (24) so ausgebildet und betriebsfähig ist, dass die VG-Einheit (12) so gesteuert wird, dass die im wesentlichen stationären Betriebsphasen des Kraftfahrzeugs (2) jeweils mit einer Kraftstoffverbrauchgünstigen Kombination von geliefertem Drehmoment und Drehzahl des Verbrennungsmotors (14) gefahren werden, wobei
die Steuerelektronik (24) so ausgebildet und betriebsfähig ist, dass sie, für den Übergang von einer Betriebsphase mit einem ersten Leistungszustand des Elektromotors (18; 20) und/oder mindestens eines Stromnebenverbrauchers (26) des Kraftfahrzeugs (2) zu einer Betriebsphase mit einem höheren, zweiten Leistungszustand des Elektromotors (18; 20) und/oder mindestens eines Stromnebenverbrauchers (26), die Anforderung elektrischer Leistung von einem Elektromotor (18; 20) und/oder von mindestens einem Stromnebenverbraucher (26) vorübergehend in einem derartigen Ausmaß reduziert, dass die Leistungsabgabe des Generators (16) der VG-Einheit (12) geringer ist als zuvor, so dass ein rascherer Übergang des Verbrennungsmotors von einer ersten Leistungsabgabe zu einer höheren zweiten Leistungsabgabe erreicht wird, wobei in Abhängigkeit von dem Unterschied zwischen dem ersten Leistungszustand und dem geforderten zweiten Leistungszustand Reduzierungen der Anforderung elektrischer Leistung in unterschiedlicher Größe eingesetzt werden.

3. Kraftfahrzeug nach Anspruch 2,
**dadurch gekennzeichnet, dass** die Steuerelektronik (24) so ausgebildet und betriebsfähig ist, daß sie während des Übergangs von der ersten Leistungsabgabe zu der zweiten Leistungsabgabe die Reduzierung der Anforderung elektrischer Leistung dynamisch an den momentan bestehenden Unterschied zwischen dem momentanen Leistungsniveau und der zweiten Leistungsabgabe anpaßt.

4. Kraftfahrzeug nach Anspruch 2 oder 3,
**dadurch gekennzeichnet, dass** der Leistungsbefehlsgeber (30) ein vom Fahrer des Fahrzeugs bedienbares, mechanisches Element, vorzugsweise ein Pedal (32), und einen Wandler (34), der die Stellung und/oder die Änderung der Stellung des mechanischen Elements in ein elektrisches Signal umsetzt, aufweist.

5. Kraftfahrzeug nach einem der Ansprüche 2 bis 4,
**dadurch gekennzeichnet, dass** eine elektronische Modifikationseinrichtung (40) vorgesehen ist, mit der das Signal des Leistungsbefehlsgebers (30) und/oder ein die Stromaufnahme des Stromnebenverbrauchers (26) widerspiegelndes Signal in ein modifiziertes Signal umgesetzt werden kann.

6. Kraftfahrzeug nach Anspruch 5,
**dadurch gekennzeichnet, dass** mittels der Modifikationseinrichtung (40) ein hinsichtlich der Amplitude und/oder der Form und/oder der Zeitlage und/oder des zeitlichen Verlaufs modifiziertes Signal erzeugt werden kann.

7. Kraftfahrzeug nach einem der Ansprüche 5 bis 6,
**dadurch gekennzeichnet, dass** mittels der Modifikationseinrichtung (40) als modifiziertes Signal ein zeitlich geramptes Signal erzeugt werden kann.

8. Kraftfahrzeug nach Anspruch 7,
**dadurch gekennzeichnet, dass** das modifizierte Signal nur für einen Teil seiner Dauer gerampt ist.

9. Kraftfahrzeug nach einem der Ansprüche 5 bis 8,
**dadurch gekennzeichnet, dass** mittels der Modifikationseinrichtung (40) ein modifiziertes Signal erzeugt werden kann, welches einen Zeitverzug bei der Reduzierung der Anforderung elektrischer Leistung enthält.

**10.** Kraftfahrzeug nach einem der Ansprüche 5 bis 9,
**dadurch gekennzeichnet, dass** die Modifikationseinrichtung mehrere Modifikationsweisen (40) gespeichert enthält und daß zwischen den Modifikationsweisen gewählt werden kann.

**Revendications**

**1.** Procédé de mise en service d'un véhicule automobile terrestre (2) non assujetti à des rails, doté d'une transmission comprenant les éléments suivants :

- un groupe générateur à moteur à combustion interne (12) (= groupe VG) ;
- au moins un moteur électrique d'entraînement (18 ; 20) ;
- un émetteur d'instructions de puissance (30) pour le moteur électrique (18 ; 20), manoeuvrable par le conducteur du véhicule (2) ;
- et une électronique de commande (24) reliée au groupe VG (12), au moteur électrique (18 ; 20) et à l'émetteur d'instructions de puissance (30),

où le groupe VG (12) est commandé au moyen de l'électronique de commande (24) de manière que les phases de service essentiellement stationnaires du véhicule (2) soient respectivement lancées avec une combinaison économe en carburant du couple délivré et de la vitesse de rotation du moteur à combustion interne (14), où, pour le passage d'une phase de service avec un premier état de puissance du moteur électrique (18 ; 20) et/ou au moins d'un récepteur de courant auxiliaire (26) du véhicule (2) à une phase de service avec un deuxième état de puissance supérieur du moteur électrique (18 ; 20) et/ou au moins d'un récepteur de courant auxiliaire (26), la demande de puissance électrique d'un moteur électrique (18 ; 20) et/ou au moins d'un récepteur de courant auxiliaire (26) est transitoirement réduite dans une mesure telle que la puissance délivrée par le générateur (16) du groupe CG (12) soit inférieure à précédemment, de manière à obtenir un passage plus rapide du moteur à combustion interne (14) d'une première puissance délivrée à une deuxième puissance délivrée supérieure, et où, en fonction de la différence entre le premier état de puissance et le deuxième état de puissance appelé, des réductions de la demande de puissance électrique sont appliquées suivant des valeurs différenciées.

**2.** Véhicule automobile terrestre (2) non assujetti à des rails, doté d'une transmission comprenant les éléments suivants :

- un groupe générateur à moteur à combustion interne (12) (= groupe VG) ;
- au moins un moteur électrique d'entraînement (18 ; 20) ;
- un émetteur d'instructions de puissance (30) pour le moteur électrique (18 ; 20), manoeuvrable par le conducteur du véhicule (2) ;
- et une électronique de commande (24) reliée au groupe VG (12), au moteur électrique (18 ; 20) et à l'émetteur d'instructions de puissance (30),

où l'électronique de commande (24) est réalisée et rendue opérationnelle de manière à commander le groupe VG (12) pour que les phases de service essentiellement stationnaires du véhicule (2) soient respectivement lancées avec une combinaison économe en carburant du couple délivré et de la vitesse de rotation du moteur à combustion interne (14), où l'électronique de commande (24) est réalisée et rendue opérationnelle de manière à réduire transitoirement la demande de puissance électrique d'un moteur électrique (18 ; 20) et/ou au moins d'un récepteur de courant auxiliaire (26), pour le passage d'une phase de service avec un premier état de puissance du moteur électrique (18 ; 20) et/ou au moins d'un récepteur de courant auxiliaire (26) du véhicule (2) à une phase de service avec un deuxième état de puissance supérieur du moteur électrique (18 ; 20) et/ou au moins d'un récepteur de courant auxiliaire (26), et ce dans une mesure telle que la puissance délivrée par le générateur (16) du groupe CG (12) soit inférieure à précédemment, de manière à obtenir un passage plus rapide du moteur à combustion interne (14) d'une première puissance délivrée à une deuxième puissance délivrée supérieure, et où, en fonction de la différence entre le premier état de puissance et le deuxième état de puissance appelé, des réductions de la demande de puissance électrique sont appliquées suivant des valeurs différenciées.

**3.** Véhicule selon la revendication 2,
**caractérisé en ce que** l'électronique de commande (24) est réalisée et rendue opérationnelle de manière à ajuster dynamiquement la réduction de la demande de puissance électrique à la différence actuelle entre le niveau de puissance actuel et la deuxième puissance délivrée pendant le passage de la première puissance délivrée à la deuxième puissance délivrée.

**4.** Véhicule selon la revendication 2 ou la revendication 3,
**caractérisé en ce que** l'émetteur d'instructions de puissance (30) comprend un élément mécanique manoeuvrable par le conducteur du véhicule, de préférence une pédale (32), et un convertisseur (34), lequel convertit la position et/ou la variation de position de l'élément mécanique en un signal électrique.

**5.** Véhicule selon l'une des revendications 2 à 4,
**caractérisé en ce qu'**un dispositif électronique de modification (40) est prévu, au moyen duquel le signal de l'émetteur d'instructions de puissance (30) et/ou un signal reflétant la consommation de courant du récepteur de courant auxiliaire (26) peut être transformé en un signal modifié.

**6.** Véhicule selon la revendication 5,
**caractérisé en ce qu'**un signal modifié quant à l'amplitude et/ou à la forme et/ou à la position temporelle et/ou à la courbe temporelle peut être généré au moyen du dispositif de modification (40).

**7.** Véhicule selon l'une des revendications 5 ou 6,
**caractérisé en ce qu'**un signal en rampe temporelle peut être généré en tant que signal modifié au moyen du dispositif de modification (40).

**8.** Véhicule selon la revendication 7,
**caractérisé en ce que** le signal modifié n'est en rampe que pour une partie de sa durée.

**9.** Véhicule selon l'une des revendications 5 à 8,
**caractérisé en ce qu'**un signal modifié peut être généré au moyen du dispositif de modification (40), lequel comporte un retard à la réduction de la demande de puissance électrique.

**10.** Véhicule selon l'une des revendications 5 à 9,
**caractérisé en ce que** le dispositif de modification comprend plusieurs modes de modification (40) mémorisés, et **en ce qu'**il est possible de choisir parmi les modes de modification.

**Claims**

**1.** A method for operating a non-rail bound land motor vehicle (2) which has a drive system with the following components:

- an internal combustion engine-generator unit (12) ;
- at least one electric drive motor (18; 20);
- a power command signal generator (30), which can be operated by the driver of the motor vehicle (2), for the electric motor (18; 20);
- and an electronic control system (24) which is connected to the internal combustion engine-generator unit (12), to the electric motor (18; 20) and to the power command signal generator (30), the internal combustion engine-generator unit (12) being controlled by means of the electronic control system (24) in such a way that the motor vehicle (2) is operated in the essentially steady-state operating phases in each case with a combination of supplied torque and rotational speed of the internal combustion engine (14) which is favorable for fuel consumption,

wherein for the transition from an operating phase with a first power state of the electric motor (18; 20) and/or of at least one secondary current load (26) of the motor vehicle (2) to an operating phase with a higher, second power state of the electric motor (18; 20) and/or of at least one secondary current load (26), the electrical power demand of the electric motor (18; 20) and/or of at least one secondary current load (26) is temporarily reduced to such an extent, that the power output level of the generator (16) of the internal combustion engine-generator unit (12) is lower than before, so as to achieve a faster transition of the internal combustion engine from a first power output level to a higher, second power output level,
wherein, dependent on the difference between the first power state and the demanded second power state, reductions of varying magnitudes in the electrical power demand are used.

**2.** A non-rail bound land motor vehicle (2) which has a drive system with the following components:

- an internal combustion engine-generator unit (12) ;
- at least one electric drive motor (18; 20);
- a power command signal generator (30), which can be operated by the driver of the motor vehicle (2), for the electric motor (18; 20);
- and an electronic control system (24) which is connected to the internal combustion engine-generator unit (12), to the electric motor (18; 20) and to the power command signal generator (30), the electronic control system (24) being embodied and being capable of operating in such a way that the internal combustion engine-generator unit (12) is controlled in such a way that the motor vehicle (2) is operated in the essentially steady-state operating phases in each case with a combination of supplied torque and rotational speed of the internal combustion engine (14) which is favorable for fuel consumption,

wherein the electronic control system (24) is embodied and capable of operating in such a way that, for the transition from an operating phase with a first power state of the electric motor (18; 20) and/or of at least one secondary current load (26) of the motor vehicle (2) to an operating phase with a higher, second power state of the electric motor (18; 20) and/or of at least one secondary current load (26), it temporarily reduces the electrical power demand of the electric motor (18; 20) and/or of at least one secondary current load (26) to such an extent, that the power output level of the generator (16) of the internal combustion engine-generator unit (12) is lower than before, so as to achieve a faster transition of the internal combustion engine from a first power output level to a higher, second power output level,

wherein, dependent on the difference between the first power state and the demanded second power state, reductions of varying magnitudes in the electrical power demand are used.

**3.** The motor vehicle as claimed in claim 2, **characterized in that** the electronic control system (24) is embodied and capable of operating in such a way that, during the transition from the first power output level to the second power output level, it dynamically adapts the reduction in the demand for electrical power to the instantaneous difference between the instantaneous power level and the second power output level.

**4.** The motor vehicle as claimed in claim 2 or 3, **characterized in that** the power command signal generator (30) has a mechanical element, preferably a pedal (32), which can be operated by the driver of the vehicle, and a transducer (34) which converts the position and/or the change in the position of the mechanical element into an electrical signal.

**5.** The motor vehicle as claimed in one of claims 2 to 4, **characterized in that** an electronic modification device (40) is provided with which the signal of the power command signal generator (30) and/or a signal which reflects the power consumption of the secondary current load (26) can be converted into a modified signal.

**6.** The motor vehicle as claimed in claim 5, **characterized in that** a signal which is modified in terms of the amplitude and/or the shape and/or the timing and/or the time profile can be generated by means of the modification device (40).

**7.** The motor vehicle as claimed in one of claims 5 to 6, **characterized in that** a signal with ramped time profile can be generated as a modified signal by means of the modification device (40).

**8.** The motor vehicle as claimed in claim 7, **characterized in that** the modified signal has a ramped time profile only for a part of its duration.

**9.** The motor vehicle as claimed in one of claims 5 to 8, **characterized in that** a modified signal which contains a time delay in the reduction of the demand for electrical power can be generated by means of the modification device (40).

**10.** The motor vehicle as claimed in one of claims 5 to 9, **characterized in that** the modification device contains a plurality of modification kinds (40) stored in it, and **in that** it is possible to select between the modification kinds.

# FIG.1

## FIG.2

```
30 ──┐
      ┌─────────────────┐
      │  Befehlsgeber   │
      └─────────────────┘
               │
50 ──┐        ◇
      ┌───────────────────┐
      │   P-Zustand 2      │──── nein
      │  > P-Zustand 1     │
      └───────────────────┘
               │ ja
52 ──┐
      ┌─────────────────────────┐
      │ P- Red = f (△ P- Zustand,│
      │   Rampe, n-Mot, etc.)    │
      └─────────────────────────┘
               │
54 ──┐        ◇                        ┌──────────────────┐
      ┌───────────────────┐            │  Vergrößerung    │
      │   n-Mot (t+△t)     │── nein ────│   von P-Red      │
      │   > n-Mot ( t )    │            └──────────────────┘
      └───────────────────┘
               │ ja
      ┌───────────────────┐
      │  Verkleinerung    │
      │   von  P-Red      │
      └───────────────────┘
               │
56 ──┐        ◇
nein ─┤   P-Zustand 2     │
      │    erreicht       │
      └───────────────────┘
               │ ja
```

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0556942 A1

- EP 0647541 A2